# EUROPEAN PATENT APPLICATION

(11) **EP 2 739 045 A2**
(43) Date of publication of application: **04.06.2014**
(21) Application number: 14153685.4
(22) Date of filing: 20.07.2007
(51) Int. Cl.: H04N 7/167, H04H 60/07, H04H 40/18, H04N 5/04

(54) **Method for generating the counter block value**

(30) Priority: 20.07.2006 KR 20060068038
(62) Divisional of application: 07768840.6
(71) Applicant: Electronics and Telecommunications Research Institute, Daejeon-city 305-350 (KR)
(72) Inventor: Lee, Jin-Hwan, 305-345 Daejon (KR); Lee, Yong-Hoon, 305-251 Daejon (KR); Hahm, Young-Kwon, 305-755 Daejon (KR); Ahn, Chung-Hyun, 305-340 Daejon (KR); Lee, Soo-In, 302-120 Daejon (KR)
(74) Representative: Betten & Resch

(57) **Abstract**

Provided is a method for simply generating counter block values without additionally transmitting the counter block values. The method for generating a counter block value required by a scrambler or a descrambler includes the steps of: a) setting up a counter of a message to a predetermined initial value, when a counter block to be scrambled or descrambled is in an initial part of the message; b) storing a Common Interleaved Frame (CIF) count value corresponding to the initial part of the message in a buffer, when the counter block to be scrambled or descrambled is in the initial part of the message; c) increasing the counter by a predetermined number; and d) generating the counter block value by using the CIF count value stored in the step b) and the counter increased in the step c).

## Description

### TECHNICAL FIELD

The present invention relates to a method for generating a counter block value; and, more particularly, to a method for simply processing a counter block value without additionally transmitting/receiving the counter block value.

This work was partly supported by the Information Technology (IT) research and development program of the Korean Ministry of Information and Communication (MIC) and the Korean Institute for Information Technology Advancement (IITA) [2005-S-403-02, "Development of Super-intelligent Multimedia Anytime-anywhere Realistic TV (SmarTV) Technology"] .

### BACKGROUND ART

Digital Audio Broadcasting (DAB) based on Eureka-147 provides not only digital audio broadcasting service but also diverse multimedia services, such as slide show, broadcast web sites, traffic and travelers information service. The standard and technology for providing the Eureka-147-based DAB technology with a moving picture video service is Digital Multimedia Broadcasting (DMB) standard and technology.

The frame configuration of the Eureka-147 includes an audio service part, a video service part, and a data service part. Information on each service is multiplexed and transmitted on the basis of a 24-msec unit frame.

A DMB transmission frame is formed of a synchronization channel, a Fast Information Channel (FIC), and a Main Service Channel (MSC).

An FIC includes a plurality of fast information blocks (FIBs), and an MSC includes a plurality of common interleaved frames (CIFs).

The CIFs include video data and audio data, and the FIBs include information on the configuration of the data included in the CIFs. Each of the FIGs includes a fast information group (FIG), which transmits signals for setting up parameters for conditional access. The first FIB of each transmission frame includes a CIF count information. In other words, the CIF count information is transmitted by being carried on the FIG. The CIF count information is used to calculate a corresponding CIF count value and the data are encoded/decoded on a unit of CIF basis. The CIF count value is 13-bit-long and the counter operates in a 5,000 binary.

Also, a conditional access synchronization parameter (CASyncParam) is used in a process of descrambling a message in a receiver to synchronize the message with a descrambler or another function of the receiver. The conditional access synchronization parameter (CASyncParam) is transmitted by being carried on a prefix of a message to be scrambled or descrambled. The conditional access parameter (CASyncParam) delivers a message identifier as well as toggle information representing a change of a control word and a CIF count value.

Whether a particular content is accessible is determined by a receiver in a Conditional Access System (CAS). Those who pay for the content can use the content in the conditional access system.

In general, a conditional access system requires scrambling and descrambling functions to protect a content from unauthorized users, an entitlement control function and an entitlement management function to provide a content only those who have made a predetermined payment.

First, scrambling is a technique for deforming a content using a control word (CW) to protect the content from unauthorized users. A transmitter needs encryption to protect the scrambled content and the control word to be transmitted to a decryptor of a receiver. The receiver needs the same secrete key that the transmitter has to execute descrambling.

The entitlement control is a technique for encrypting the control word. Encrypted control word is transmitted to the receiver by being carried on an entitlement control message (ECM) . The entitlement control message is periodically transmitted for the sake of security, and the transmitted entitlement control message includes an encrypted control word. The entitlement control message also includes a control parameter. The receiver compares the control parameter included in the transmitted entitlement control message with an authorization parameter stored in the receiver, determines whether a user has an authority for accessing to a content. When it is determined that the user has an access authority, the receiver decrypts the control word using the secrete key and descrambles the received content using the decrypted control word.

In order to encrypt and decrypt a content in a scrambler and a descrambler using a counter mode of block encryptions, the control word and a counter block value that is changed for each counter block are required.

Meanwhile, the European Telecommunication Standards Institute (ETSI) Technical Specification (TS) 102 367, which is the international standard for conditional access to terrestrial DMB contents defines three conditional access modes according to a scrambling method: sub-channel conditional access, a data group conditional access, and a Multimedia Object Transfer (MOT) conditional access.

Scrambling and descrambling are executed for each message in a content. Thus, one message to be scrambled should be processed continuously, and the control word used for scrambling or descrambling one message should not be changed. In a terrestrial DMB content, the length of messages to be scrambled or descrambled is different and message transmission periods are not the same, either. In case of the sub-channel conditional access mode, a message transmission/reception period is the same as CIF, which is 24msec. In case of the data group conditional access mode and the MOT conditional access mode, the message transmission/reception period is not regular and a message may be transmitted/ received over one or more CIFs.

The scrambling method is divided into two types: a block encryption and a stream encryption. The block encryption method such as an Advanced Encryption Standard (AES) is superior to the stream encryption with respect to the security.

National Institute of Standards and Technology (NIST) Special Publication 800-38A, which is recommended standard for the use of the block encryption method, suggests five AES standard operation modes. To be specific, the NIST Special Publication 800-38A defines the following five modes: an Electric Code Book (ECB) mode, a Cipher Block Chaining (CBC) mode, a Cipher Feedback (CFB) mode, an Output Feedback (OFB) mode, and a Counter (CTR) mode. The present invention involves in the counter mode among the five block encryption methods.

The NIST Special Publication 800-38A suggests two methods to set up a counter block value of a message to be scrambled. Herein, the counter block value denotes a value given differently for each block to execute scrambling or descrambling in the counter mode. According to the counter mode of block encryptions, which is used in a scrambler, a message is divided into a plurality of blocks and the blocks are scrambled.

According to the first method, the first counter block value of a message is a value obtained by adding a predetermined number to the last counter block value of a previous message. In other words, the first counter block value of the first message is initialized to "0" and a value increased by "1" for each block is used as a counter block value. The first counter block value of the second message is a value obtained by adding "1" to the last counter block value of the first message.

However, when the user changes a channel, the above-described method cannot normally present the content to the user, because the changed channel needs a new control word and no counter block value is known until the new control word is received. In short, the method has a shortcoming that a user should wait until a new control word is received whenever a channel is changed.

The second method is similar to the first method for a half-bit part of a counter block. The first counter block value of each message is initialized to "0" and each of the subsequent counter block values increases by "1" in one message. The other half-bit part of the counter block includes an identifier having values that are not overlapped with other messages. The second method, however, also has a problem in that frequency is consumed to transmit the identifier to the receiver so that each message has a different identifier.

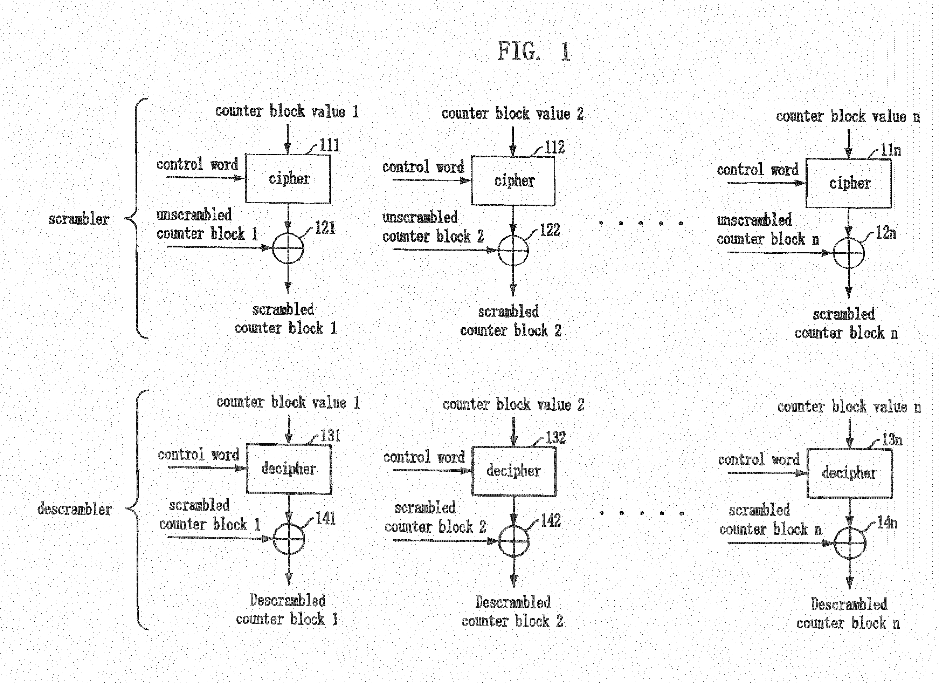

Fig. 1 illustrates a counter mode of block encryptions that is used in a conventional scrambler/descrambler. Referring to Fig. 1, a scrambler scrambles a content, which is a sequence of counter blocks, using a control word, and the control word varies into random numbers at a period of several to scores of seconds to be protected from being hacked.

According to the counter mode of block encryptions, which is used as a scrambler, a content is divided into a plurality of blocks and scrambled. As long as the same control word is used, the counter values of the blocks, which will be referred to as counter block values herein, should be different from each other. Therefore, when a content is divided into n blocks and scrambled using the same control word, n different counter block values are needed.

Ciphers 111, 112,.., 11n of the scrambler outputs encrypted data for each counter block using the control word and the counter block values, which are different for each block. XOR operators 121, 122, ... 12n of the scrambler executes XOR operation onto the encrypted output data and the unscrambled counter blocks that are divided into n. The operation result of the XOR operators in the scrambler is a scrambled content.

Deciphers 131, 132,... 13n of a descrambler decrypts the scrambled content using the same counter block values and control word that are used in the scrambler. Herein, the ciphers have two types. One is a forward cipher and the other is a backward cipher. The deciphers of a descrambler used in the counter mode are same as the forward ciphers of the scrambler.

The counter mode of block encryptions requires transmitting a control word and counter block values from the transmitter to the receiver, and frequency is used to transmit the counter block values that are different for each counter block. Thus, it is inefficient with the respect of using frequency.

Therefore, it is required to develop a method for generating counter block values that are not repeated throughout the blocks while the same control word is used in order not to additionally transmit counter block values.

### SUMMARY OF THE INVENTION

An embodiment of the present invention is directed to providing a method for generating counter block values that are not repeated throughout the blocks while the same control word is used in order not to additionally transmit counter block values in a scrambling or descrambling process.

In accordance with an aspect of the present invention, which is devised to satisfy the demand, there is provided a method for simply processing counter block values while not additionally transmitting or receiving the counter block values.

The method of the present invention generates counter block values by combining CIF count values and counters. Since counter block values are not additionally transmitted, frequency utility efficiency can be increased.

### BRIEF DESCRIPTION OF THE DRAWINGS

Fig. 1 illustrates a counter mode of block encryptions that is used in conventional scramblers and descramblers .
Fig. 2 is a flowchart describing a method for generating counter block values required in a scrambler or descrambler in accordance with an embodiment of the present invention.

### DETAILED DESCRIPTION

In accordance with an aspect of the present invention, which is devised to achieve the object, there is provided a method for generating a counter block value required by a scrambler or a descrambler, which includes the steps of: a) setting up a counter of a message to a predetermined initial value, when a counter block to be scrambled or descrambled is in an initial part of the message; b) storing a Common Interleaved Frame (CIF) count value corresponding to the initial part of the message in a buffer, when the counter block to be scrambled or descrambled is in the initial part of the message; c) increasing the counter by a predetermined number; and d) generating the counter block value by using the CIF count value stored in the step b) and the counter increased in the step c).

In accordance with another aspect of the present invention, which is devised to achieve the object, there is provided a method for generating a counter block value required by a scrambler or a descrambler, which includes the steps of: a) setting up a counter of a message to a predetermined initial value, when a counter block to be scrambled or descrambled is in an initial part of the message; b) storing an identifier of the message carried on a conditional access synchronization parameter (CASyncParam) in a buffer, when the counter block to be scrambled or descrambled is in the initial part of the message; c) increasing the counter by a predetermined number; and d) generating the counter block value by using the identifier of the message stored in the step b) and the counter increased in the step c).

In accordance with another aspect of the present invention, which is devised to achieve the object, there is provided a method for generating a counter block value required by a scrambler or a descrambler, which includes the steps of: a) setting up a counter of a message to a predetermined initial value, when a counter block to be scrambled or descrambled is in an initial part of the message; b) storing an initialization counter block value in a buffer, when the counter block to be scrambled or descrambled is in the initial part of the message; c) increasing the counter by a predetermined number; and d) generating the counter block value by using the initialization counter block value stored in the step b) and the counter increased in the step c).

In accordance with another aspect of the present invention, which is devised to achieve the object, there is provided a method for generating a counter block value required by a scrambler or a descrambler, which includes the steps of: a) extracting a first value from data received or to be transmitted; b) generating a second value altering for each counter block of a unit message; and c) generating the counter block value by using the first value and the second value.

Also, the first value may be a Common Interleaved Frame (CIF) count value corresponding to the initial part of a message or a value included in a conditional access synchronization parameter. Examples of the value included in a conditional access synchronization parameter are an identifier of the message and an initialization counter value.

Meanwhile, the second value is initialized on a basis of a unit message and the second value alters as much as a predetermined value for each of the counter blocks of the unit message.

The advantages, features and aspects of the invention will become apparent from the following description of the embodiments with reference to the accompanying drawings, which is set forth hereinafter.

In general, a control word alters at several to scores of seconds, and a Common Interleaved Frame (CIF) count values increase by "1" at every 24msec. Since the increment period of the CIF count values is shorter than the alteration period of the control word, the CIF count value may be used for part of counter block values. Also, the identifier of a message that can be transmitted by being carried on a conditional access synchronization parameter (CASyncParam) may be used for part of the counter block values instead of the CIF count values.

According to an embodiment of the present invention, the initialization counter block value defined in conditional access modes of terrestrial DMB contents, which are a sub-channel scrambling mode, a data group scrambling mode, and an MOT scrambling mode, may be used as the identifier of a message for part of the counter block values instead of the CIF count values. To be specific, the initialization counter block value is included in a conditional access prefix (CAPrefix) for each message and transmitted in a terrestrial DMB conditional access method. In case of 1) the sub-channel scrambling mode, the initialization counter block value may be disposed in the second and third bytes when a padding packet indicator is "0," or it is disposed in the third and fourth bytes when the padding packet indicator is "1." In case of 2) the data group scrambling mode, the initialization counter block value may be disposed in the first byte. In case of 3) the MOT scrambling mode, the initialization counter block value may be disposed in the first and second bytes.

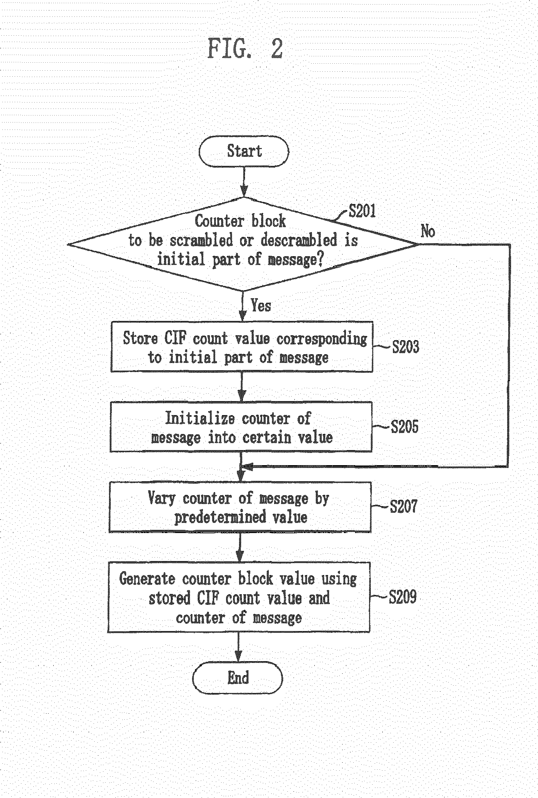

Fig. 2 is a flowchart describing a method for generating counter block values required in a scrambler or descrambler in accordance with an embodiment of the present invention. The drawing shows an embodiment using a CIF count value. Herein, the initialization counter block value may be used as the identifier of a message, instead of the CIF count value.

Referring to Fig. 2, when a message is inputted, it is determined in step S201 whether a counter block to be scrambled or descrambled is the initial part of the message.

In step S203, a CIF count value corresponding to the initial part of the message is stored.

In step S205, when the counter block is the initial part of the message, a counter of the message is initialized into a predetermined initial value.

Subsequently, the initialized counter of the message alters by a predetermined value in step S207. For example, the counter may increase as much as the predetermined value for each counter block of a unit message.

Meanwhile, when the counter block is not the initial part of the message, the counter alters, for example, increases, as much as the predetermined value for each counter block of a unit message in the step S207.

Subsequently, a counter block value is generated using the stored CIF count value and the counter of the message that is increased by the predetermined value in step S209. The counter block value may be generated by simply combining the stored CIF count value and the counter of the message that is increased by the predetermined value, or by executing a predetermined operation. Herein, when it is determined that the counter block is not the initial part of the message, the stored CIF count value is a CIF count value corresponding to the initial part of the message. For example, when a 128-bit counter block value is generated, the 13 most significant bits (MSB) use the CIF count value and the remaining 115 least significant bits (LSB) use the counter of the message.

The counter block of each block is generated in the above-described method. Therefore, it is possible to generate counter block values used in a scrambler and a descrambler without transmitting the counter block values. The method of the present invention described in the above may be realized as a program and stored in a computer-readable recording medium, such as CD-ROM, RAM, ROM, floppy disks, hard disks, and magneto-optical disks. Since the process can be easily implemented by those skilled in the art to which the present invention pertains, detailed description will not be provided herein.

The present invention provides a method for generating counter block values not repeated throughout the blocks of a message as long as the same control word is used without additionally transmitting the counter block values in a process of scrambling or descrambling.

Further embodiments according to the present invention are described in the following.
Embodiment 1: A method for generating a counter block value required by a scrambler or a descrambler, comprising the steps of:
   a) setting up a counter of a message to a predetermined initial value, when a counter block to be scrambled or descrambled is in an initial part of the message;
   b) storing a Common Interleaved Frame (CIF) count value corresponding to the initial part of the message in a buffer, when the counter block to be scrambled or descrambled is in the initial part of the message;
   c) increasing the counter by a predetermined number; and
   d) generating the counter block value by using the CIF count value stored in the step b) and the counter increased in the step c).
Embodiment 2: The method of according to embodiment 1, wherein the CIF count value is entire or part of a CIF count value included in a Fast Information Group (FIG) of a transmission frame.
Embodiment 3: The method of according to embodiment 1, wherein the CIF count value is entire or part of a CIF count value included in a conditional access synchronization parameter (CASyncParam).
Embodiment 4: A method for generating a counter block value required by a scrambler or a descrambler, comprising the steps of:
   a) setting up a counter of a message to a predetermined initial value, when a counter block to be scrambled or descrambled is in an initial part of the message;
   b) storing an identifier of the message carried on a conditional access synchronization parameter (CASyncParam) in a buffer, when the counter block to be scrambled or descrambled is in the initial part of the message;
   c) increasing the counter by a predetermined number; and
   d) generating the counter block value by using the identifier of the message stored in the step b) and the counter increased in the step c).
Embodiment 5: A method for generating a counter block value required by a scrambler or a descrambler, comprising the steps of:
   a) setting up a counter of a message to a predetermined initial value, when a counter block to be scrambled or descrambled is in an initial part of the message;
   b) storing an initialization counter block value in a buffer, when the counter block to be scrambled or descrambled is in the initial part of the message;
   c) increasing the counter by a predetermined number; and
   d) generating the counter block value by using the initialization counter block value stored in the step b) and the counter increased in the step c).
Embodiment 6: The method of according to embodiment 5, wherein the initialization counter block value is included in a conditional access prefix for each message and transmitted.
Embodiment 7: A method for generating a counter block value required by a scrambler or a descrambler, comprising the steps of: a) extracting a first value from data received or to be transmitted;
   b) generating a second value altering for each counter block of a unit message; and
   c) generating the counter block value by using the first value and the second value.
Embodiment 8: The method of according to embodiment 7, wherein the first value and the second value are simply combined in a bit level in the step c).
Embodiment 9: The method of according to embodiment 8, wherein the first value forms Most Significant Bits (MSBs) of the counter block value, and the second value forms Least Significant Bits (LSBs) of the counter block value.
Embodiment 10: The method of according to embodiment 7, wherein a predetermined operation is executed onto the first value and the second value in the step c).
Embodiment 11: The method of according to embodiment 7, wherein the first value is a Common Interleaved Frame (CIF) count value corresponding to an initial part of a message.
Embodiment 12: The method of according to embodiment 7, wherein the first value is a value included in a conditional access synchronization parameter.
Embodiment 13: The method of according to embodiment 12, wherein the first value is an identifier of the message.
Embodiment 14: The method of according to embodiment 12, wherein the first value is an initialization counter value.
Embodiment 15: The method of according to embodiment 7, wherein the second value is initialized on a basis of a unit message.
Embodiment 16: The method of according to embodiment 15, wherein the second value alters as much as a predetermined value for each of the counter blocks of the unit message.

While the present invention has been described with respect to the specific embodiments, it will be apparent to those skilled in the art that various changes and modifications may be made without departing from the scope of the invention as defined in the following claims.

## Claims

1. A method for generating a counter block value required by a scrambler or a descrambler, comprising the steps of:
a) extracting a first value from data received or to be transmitted;
b) generating a second value altering for each block of a unit message; and
c) generating the counter block value by using the first value and the second value.

2. The method of claim 1, wherein the first value and the second value are simply combined in a bit level in the step c).

3. The method of claim 2, wherein the first value forms an upper bit stream of the counter block value, and the second value forms a lower bit stream of the counter block value.

4. The method of one of claims 1 to 3, wherein a predetermined operation is executed onto the first value and the second value in the step c).

5. The method of one of claims 1 to 4, wherein the first value is a Common Interleaved Frame (CIF) count value corresponding to an initial part of a message.

6. The method of one of claims 1 to 5, wherein the first value is a value included in a conditional access synchronization parameter.

7. The method of claim 6, wherein the first value is an identifier of the message.

8. The method of claim 6, wherein the first value is an initialization counter block value.

9. The method of one of claims 1 to 8, wherein the second value is initialized on a basis of a unit message.

10. The method of claim 9, wherein the second value alters as much as a predetermined value for each block of the unit message.
